(19) Europäisches Patentamt
European Patent Office
Office européen des brevets

(11) **EP 2 631 694 A1**

(12) **EUROPEAN PATENT APPLICATION**

(43) Date of publication:
**28.08.2013 Bulletin 2013/35**

(51) Int Cl.:
***G02B 13/00*** *(2006.01)*

(21) Application number: **13000948.3**

(22) Date of filing: **25.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.02.2012 JP 2012040222**

(71) Applicant: **Kyocera Document Solutions Inc.**
**Chuo-ku**
**Osaka-shi**
**Osaka 540-8585 (JP)**

(72) Inventor: **Nakano, Issei**
**Osaka-shi Osaka, 540-8585 (JP)**

(74) Representative: **Müller-Boré & Partner**
**Patentanwälte**
**Grafinger Straße 2**
**81671 München (DE)**

(54) **Optical scanning device and image forming apparatus using same**

(57)    An optical scanning device includes a light source (20) which emits a light beam, a deflector (26), an incident optical system (23,24) and one scanning lens (28). The deflector reflects and then deflects/scans the light beam emitted from the light source. The scanning lens includes a first face (281) facing the deflector and a second face (282) on an opposite side to the first face, and performs imaging of the deflected/scanned light beam on a surface to be scanned. When a curvature radius of the first face in a main scanning direction cross section is R1, a curvature radius of the second face in a main scanning direction cross section is R2, a lens thickness in an optical axis direction at a center of the scanning lens in the main scanning direction is d, and a refractive index of the scanning lens is n, following Formula (1) and Formula (2) are satisfied:

$$0 < R2 < R1 \ldots (1)$$

$$0 > R2 - R1 > -(n-1)d/n \ldots (2).$$

FIG. 2

**Description**

This application relates to and claims priority from Japanese Patent Application No. 2012-40222, filed in the Japan Patent Office on February 27, 2012, the entire disclosure of which is incorporated herein by reference.

Background

The present disclosure relates to an optical scanning device including a scanning lens which images, on a surface to be scanned, a light beam that has been deflected and scanned, and an image forming apparatus using the foregoing optical scanning device.

For example, a general optical scanning device that is used, for example, in laser printers and copiers includes a light source which emits a laser beam, a polygon mirror which reflects and then deflects/scans the laser beam, and a scanning lens which images the deflected and scanned laser beam on a peripheral surface (surface to be scanned) of a photoreceptor drum. As the scanning lens, a lens having fθ characteristics is used. Moreover, the foregoing scanning lens is generally manufactured by molding a resin material in a metal mold.

While the scanning lens is sometimes configured from a plurality of lenses, it is also sometimes configured from one lens for the purpose of downsizing the device or reducing costs. As conventional technology, in an optical scanning device in which the scanning lens is configured from one lens, known is design technology of defining the relation of the entrance face and the exit face of the scanning lens in a main scanning direction cross section. Specifically, when a curvature radius near an optical axis of the entrance face facing the polygonal mirror is R1 and a curvature radius near an optical axis of the exit face is R2, the scanning lens is configured from a meniscus lens which is convex on the polygon mirror side and which satisfies a relationship of 0<R1<R2.

Nevertheless, upon using the scanning lens of the optical scanning device of the foregoing conventional technology, there is a problem in that the optical performance is unstable, or the productivity is inferior. In other words, when the scanning lens satisfies the relationship of 0<R1<R2, the thickness of the scanning lens in the optical axis direction will become thinner from the center part to the end part in the main scanning direction. When a scanning lens having this kind of thin part is manufactured via molding, the shape tends to vary slightly in each molding process. Thus, the optical performance among the molded scanning lenses becomes unstable. This problem can be resolved by extending the cast molding time and the cooling time in the molding process. Nevertheless, a problem regarding the deterioration in productivity will naturally arise.

An object of the present disclosure is to provide an optical scanning device and an image forming apparatus capable of stabilizing the optical performance of the scanning lens.

Summary

The optical scanning device according to one aspect of the present disclosure is an optical scanning device which includes a light source which emits a light beam, a deflector, an incident optical system and one scanning lens. The deflector reflects and then deflects/scans the light beam emitted from the light source. The incident optical system causes the light beam emitted from the light source to enter the deflector. The scanning lens includes a first face facing the deflector and a second face on an opposite side to the first face, and performs imaging of the deflected/scanned light beam on a surface to be scanned. When the curvature radius of the first face in a main scanning direction cross section is R1, the curvature radius of the second face in a main scanning direction cross section is R2, the lens thickness in an optical axis direction at the center of the scanning lens in a main scanning direction is d, and the refractive index of the scanning lens is n, following Formula (1) and Formula (2) are satisfied:

$$0 < R2 < R1 \ldots (1)$$

$$0 > R2 - R1 > -(n-1)d/n \ldots (2).$$

The image forming apparatus according to another aspect of the present disclosure includes an image carrier which carries an electrostatic latent image, and an optical scanning device which irradiates a light beam with a peripheral surface of the image carrier as the surface to be scanned, wherein the optical scanning device includes the foregoing configuration.

Brief Description of the Drawings

Fig. 1 is a cross section showing the schematic configuration of the printer according to one embodiment of the present disclosure;
Fig. 2 is a perspective view showing the internal structure of the optical scanning device according to the first embodiment;
Fig. 3 is a light path diagram showing the configuration of the optical scanning device in the main scanning cross section;
Fig. 4 is a plan view showing the Comparative Example of the scanning lens;
Fig. 5 is a graph showing the optical property of the optical scanning device having the optical system of Example 1;
Fig. 6 is a light path diagram showing the configuration of the optical scanning device according to the second embodiment in the main scanning cross section;
Fig. 7 is a light path diagram of the optical scanning device in the sub scanning cross section;
Fig. 8 is a graph showing the optical property of the optical scanning device according to the second embodiment;
Fig. 9 is a graph showing the optical property of the optical scanning device according to the second embodiment;
Fig. 10 is a graph showing the optical property of the optical scanning device according to the second embodiment;
Fig. 11 is a graph showing the optical property of the optical scanning device having the optical system of Example 2;
Fig. 12 is a graph showing the optical property of the optical scanning device having the optical system of Example 2; and
Fig. 13 is a graph showing the optical property of the optical scanning device having the optical system of Example 2.

Detailed Description

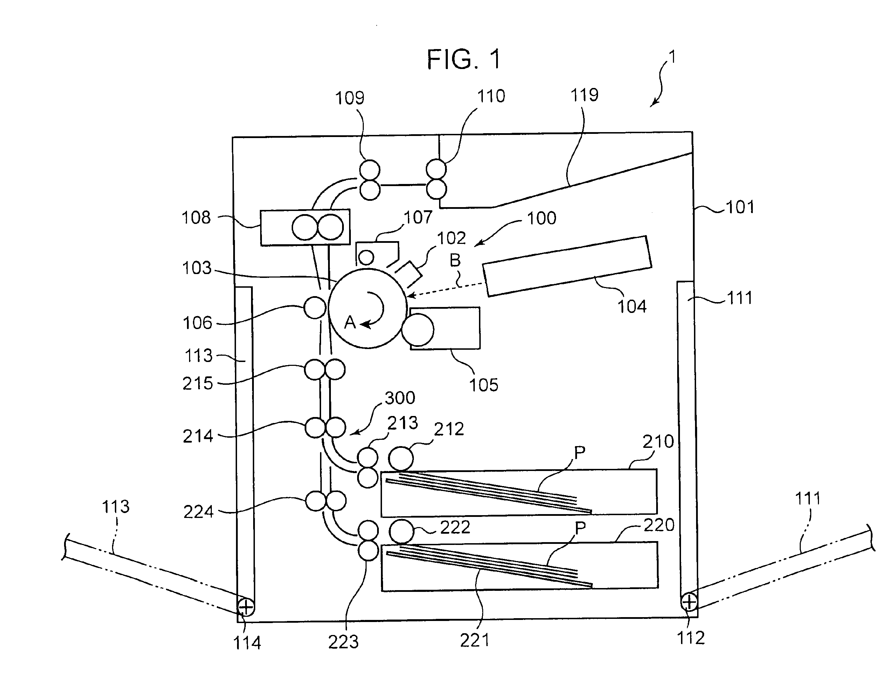

The optical scanning device according to one embodiment of the present disclosure is now explained with reference to the appended drawings. Fig. 1 is a cross section showing the schematic configuration of a printer 1 (example of an image forming apparatus) according to one embodiment of the present disclosure. Note that the image forming apparatus is not limited to the printer 1, and may also be a copier, a facsimile, a multi-function machine or the like. The printer 1 includes a box-shaped housing 101, and an image forming unit 100, an optical scanning device 104, and paper feeding cassettes 210, 220 housed in the housing 101. The paper feeding cassettes 210, 220 are detachably mounted on a bottom part of the printer 1.

A right cover 111 is provided to the right side face of the case 101, and a left cover 113 is provided to the left side face of the case 101. The right cover 111 is axially supported by an axis 112 provided to the lower side end part thereof, and can be opened and closed by turning around the axis. Similarly, the left cover 113 is axially supported by an axis 114 provided to the lower side end part thereof, and can be opened and closed by turning around the axis. The user can repair jams, replace consumable supplies or perform maintenance by opening the covers 111, 113.

The image forming unit 100 performs processing of forming a toner image on a sheet, and includes a charging device 102, a photoreceptor drum 103 (image carrier), a developing device 105, a transfer roller 106, a cleaning device 107, and a fixing unit 108.

The photoreceptor drum 103 is a cylindrical member, and an electrostatic latent image and a toner image are formed on a peripheral surface thereof. The photoreceptor drum 103 receives drive force from a motor not shown, and is rotated in a clockwise direction shown with an arrow A in Fig. 1. The charging device 102 substantially uniformly charges the surface of the photoreceptor drum 103.

The developing device 105 supplies a toner to the peripheral surface of the photoreceptor drum 103, on which an electrostatic latent image was formed, and thereby forms a toner image. The developing device 105 includes a developing roller for carrying the toner, and a screw for agitating and delivering the toner. The toner image formed on the photoreceptor drum 103 is transferred to a sheet that is fed from the paper feeding cassettes 210, 220 and delivered to a feeding path 300. The toner is supplied to the developing device 105 from a toner container not shown.

The transfer roller 106 is disposed facing a lateral side of the photoreceptor drum 103, and a transfer nip portion is formed by the transfer roller 106 and the photoreceptor drum 103. The transfer roller 106 is configured from a rubber material with conductivity and provided with a transfer bias, and transfers the toner image formed on the photoreceptor drum 103 to the sheet. The cleaning device 107 cleans the peripheral surface of the photoreceptor drum 103 after the toner image is transferred.

The fixing unit 108 includes a fixing roller with a heater build therein, and a pressure roller provided at a position facing the fixing roller. The fixing unit 108 fixes the toner image, which was transferred to a sheet, on the sheet while conveying and heating the sheet with the toner image formed thereon with the rollers.

The optical scanning device 104 forms an electrostatic latent image by irradiating a laser beam according to image data that is input from external equipment such as a personal computer to the peripheral surface (surface to be scanned) of the photoreceptor drum 103 that was substantially uniformly charged by the charging device 102. The optical scanning device 104 will be described in detail later.

The paper feeding cassettes 210, 220 house a plurality of sheets P to which images are to be formed. A feeding path 300 for delivering the sheets is disposed between the paper feeding cassettes 210, 220 and the image forming unit 100. The feeding path 300 is provided with paper feed roller pairs 213, 223, transport roller pairs 214, 224, and a resist roller pair 215. Moreover, disposed on the downstream side of the fixing unit 108 are a transport roller pair 109, and a discharge roller pair 110 for discharging the sheets to the paper discharge tray 119.

The image forming operation of the printer 1 is now briefly explained. Foremost, the peripheral surface of the photoreceptor drum 103 is substantially uniformly charged with the charging device 102. The charged peripheral surface of the photoreceptor drum 103 is exposed by a laser beam emitted from the optical scanning device 104, and an electrostatic latent image of the image to be formed on the sheet P is formed on the peripheral surface of the photoreceptor drum 103. The electrostatic latent image is developed as a toner image as a result of the toner being supplied from the developing device 105 to the peripheral surface of the photoreceptor drum 103. Meanwhile, the sheet P is fed from the paper feeding cassettes 210, 220 to the feeding path 300 by the pickup rollers 212, 222, and delivered to the transport roller pairs 214, 224. Subsequently, the sheet P is once stopped by the resist roller pair 215, and delivered to the transfer nip portion between the transfer roller 106 and the photoreceptor drum 103 at a predetermined timing. The toner image is transferred to the sheet P as a result of the sheet P passing through the transfer nip portion. After the foregoing transfer operation, the sheet P is delivered to the fixing unit 108, and the toner image is fixed to the sheet P. Subsequently, the sheet P is discharged to the paper discharge tray 119 by the transport roller pair 109 and the discharge roller pair 110.

<First embodiment of optical scanning device>

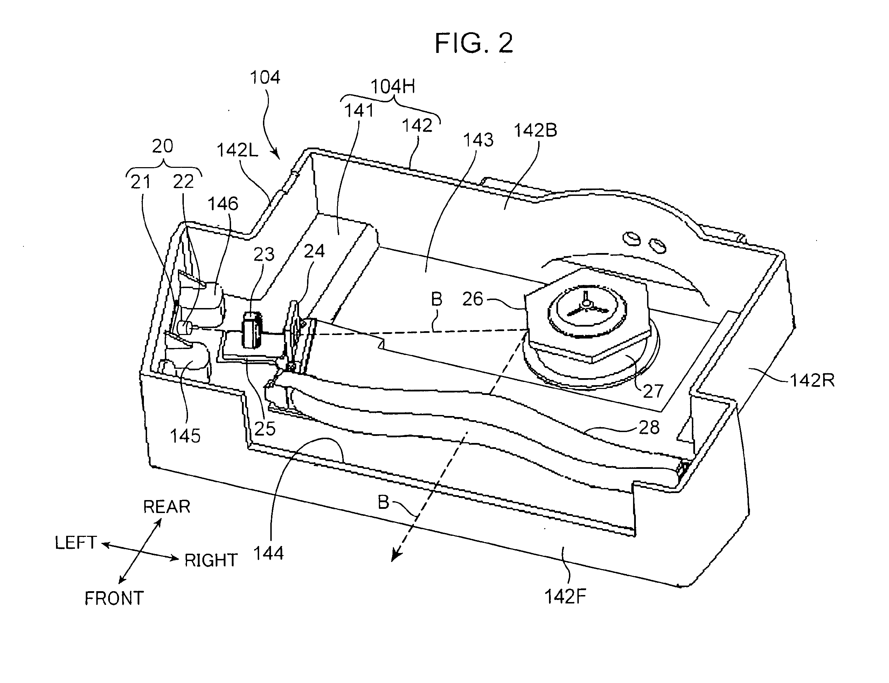

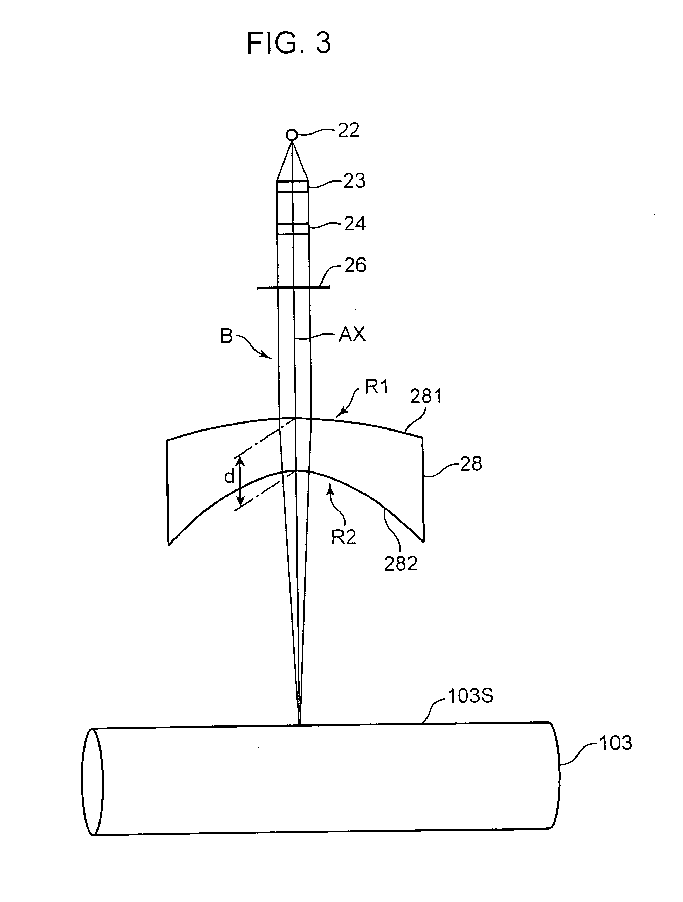

The detailed structure of the optical scanning device 104 according to the first embodiment is now explained. Fig. 2 is a perspective view showing the internal structure of the optical scanning device 104, and Fig. 3 is a light path diagram showing the configuration of the optical scanning device 104 in the main scanning cross section. Note that, in Fig. 3, what is actually a bent light path is simplified and shown as a linear light path. The optical scanning device 104 includes a housing 104H, and a laser unit 20 (light source), a collimator lens 23 (part of the incident optical system), a cylindrical lens 24 (part of the incident optical system), a polygon mirror 26 (deflector), and a fθ lens 28 (scanning lens) housed in the housing 104H. In the indication of directions shown in Fig. 2, the left-right direction is the main scanning direction. The optical scanning device 104 of this embodiment is an optical scanning device in which the scanning lens is configured from only one lens (fθ lens 28).

The housing 104H includes a bottom plate 141 as a base member on which various members are mounted, side plates 142 that are erected substantially vertically from the peripheral edges of the bottom plate 141, and a cover for covering the upside of the side plates 142. Note that, in Fig. 2, since a state where the cover has been removed is shown, the cover is not indicated. The housing 104H has a substantially square shape when viewed from the top face. The side plates 142 include a front side plate 142F which faces a peripheral surface 103S of the photoreceptor drum 103 when the optical scanning device 104 is mounted on the printer 1, a rear side plate 142B which faces the front side plate 142F, and a right side plate 142R and a left side plate 142L which connect both sides of the front side plate 142F and the rear side plate 142B.

The bottom plate 141 is provided with a recess 143 at a location which is adjacent to the rear side plate 142B and which has a height that is lower than its surroundings. A polygon mirror 26 is disposed in the recess 143, and the laser unit 20, the collimator lens 23, the cylindrical lens 24 and the fθ lens 28 are disposed in a region other than the recess 143 of the bottom plate 141. The front side plate 142F is provided with a window part 144 which is formed by notching the front side plate 142F from the upper edge up to around the intermediate portion thereof. Even in a state where the cover (not shown) is mounted, the window part 144 remains an opening of the housing 104H. Moreover, a first holding member 145 and a second holding member 146 are provided on a top face of the bottom plate 141 near the left side plate 142L. A minute gap is provided between the left side plate 142L and the first holding member 145, and between the left side plate 142L and the second holding member 146, respectively.

The laser unit 20 includes a substrate 21, and a substantially cylindrically shaped semiconductor laser 22 mounted on one face of the substrate 21. The semiconductor laser 22 is a light source which emits a laser beam (light beam) of a predetermined wavelength. Mounted on the substrate 21 are a semiconductor laser 22, and a drive circuit component for driving the semiconductor laser 22. The laser unit 20 is mounted on the top face of the bottom plate 141 such that the substrate 21 is sandwiched in the gap formed between the first holding member 145 and the left side plate 142L and the gap formed between the second holding member 146 and the left side plate 142L respectively, and such that the semiconductor laser 22 is fitted between the first holding member 145 and the second holding member 146. The irradiation position of the laser beam B can be adjusted by adjusting the position that the substrate 21 is fitted into the gap.

The collimator lens 23 converts the laser beam B, which is emitted from the semiconductor laser 22 and diffused, into parallel light or light that is close to parallel. The collimator lens 23 is fixed to the bottom plate 141 with an adhesive using the base part 25.

The cylindrical lens 24 converts the parallel light into linear light that is long in a main scanning direction, and images the linear light on a reflecting surface of the polygon mirror 26. The collimator lens 23 and the cylindrical lens 24 are an incident optical system which causes the laser beam B to enter the polygon mirror 26, and in this embodiment is configured from an oblique-incident optical system.

The polygon mirror 26 is a polygonal mirror in which a reflecting surface is formed along each side of a regular hexagon. A rotating axis of the polygon motor 27 is connected to the center position of the polygon mirror 26. The polygon mirror 26 rotates around the rotating axis as a result of the polygon motor 27 being rotatively driven, and deflects and scans the laser beam B which is emitted from the semiconductor laser 22 and imaged via the collimator lens 23 and the cylindrical lens 24.

The fθ lens 28 is a lens having fθ characteristics, and is a lens that is elongated in the main scanning direction. The fθ lens 28 is disposed between the window part 144 and the polygon mirror 26, the laser beam B reflected off the polygon mirror 26 is condensed, and images on the peripheral surface 103S of the photoreceptor drum 103 through the window part 144 of the housing 104H. The fθ lens 28 is manufactured by molding a translucent resin material in a metal mold.

Referring to Fig. 3, the fθ lens 28 includes an entrance face 281 (first face) which faces the polygon mirror 26 and to which the laser beam B enters, and an exit face 282 (second face) which is a face on an opposite side to the entrance face 281 and from which the laser beam B exists. Note that, in Fig. 3, the fθ lens 28 is simplified and shown.

The fθ lens 28 has the following lens shape. In other words, when the curvature radius of the entrance face 281 in the main scanning direction cross section near the optical axis AX is R1, and the curvature radius of the exit face 282 in the main scanning direction cross section near the optical axis AX is R2, the lens shape satisfies the condition of following Formula (1).

$$0 < R2 < R1 \quad ...(1)$$

As a result of satisfying foregoing Formula (1), it is possible to prevent the thickness of the fθ lens 28 in the optical axis AX direction from becoming thin from the center part toward the end part in the main scanning direction. Accordingly, it is possible to improve the productivity of the fθ lens 28 based on molding, and more easily stabilize the optical performance of the fθ lens 28.

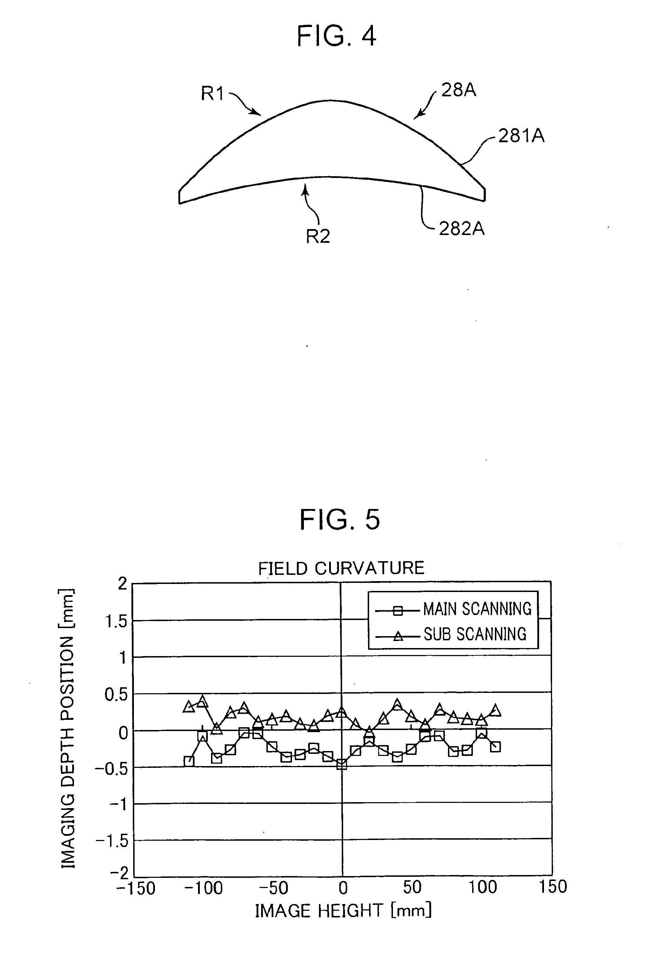

Fig. 4 is a main scanning cross section of the fθ lens 28A shown for comparison. With this fθ lens 28A, the curvature radius R1 near the optical axis AX of the entrance face 281A in the main scanning direction cross section is smaller than the curvature radius R2 near the optical axis AX of the exit face 282A in the main scanning direction cross section. Thus, the thickness of the fθ lens 28A in the optical axis AX direction becomes thinner from the center part toward the end part in the main scanning direction. When this kind of fθ lens 28A that is thin at either end part is manufactured via mold forming, the shape of either end part tends to vary slightly for each molding process. Thus, the optical performance becomes unstable among the molded fθ lenses 28A. This problem can be resolved by increasing the cast molding time and the cooling time in the mold forming. Nevertheless, it goes without saying that there is a problem in that the productivity will deteriorate. The fθ lens 28 of this embodiment can resolve this kind of problem.

Here, the focal distance of a single lens is represented with following Formula (11) in a paraxial region. Note that the lens thickness of the single lens in the optical axis direction is d, and the refractive index is n.

$$f = \cfrac{1}{(n-1)\left(\cfrac{1}{R1} - \cfrac{1}{R2}\right) + \cfrac{(n-1)^2 d}{nR1R2}} = \cfrac{1}{(n-1)\left(\cfrac{n(R2-R1)+(n-1)d}{nR1R2}\right)} \quad \cdots(11)$$

Since the fθ lens 28 assumes the role of imaging the light beam of the laser beam B on the peripheral surface 103S of the photoreceptor drum 103, the focal distance f of the fθ lens 28 needs to satisfy following Formula (12).

$$f > 0 \quad ...(12)$$

Here, the lens thickness of the optical axis direction at the center of the fθ lens 28 in the main scanning direction is d, and the refractive index of the fθ lens 28 is n. It is evident that the values of both R1 and R2 are more of a positive value than foregoing Formula (1). Moreover, generally speaking, the refractive index of an optical lens material is n>1. In light of these points, the relation of following Formula (13) is established based on foregoing Formula (11) and Formula (12).

$$n(R2-R1) + (n-1)d>0...(13)$$

Based on foregoing Formula (11), in order to increase the focal distance f , the value of n(R2-R1) + (n-1)d needs to be decreased. Assuming that, unlike the relation of foregoing Formula (1), the relation of R1, R2 is as follows as with conventional technology,

$$0<R1<R2...(1)',$$

the value of n(R2-R1) will take on a positive value and, as described above, since n>1, the value of (n-1)d also becomes a positive value. Thus, the value of n(R2-R1) + (n-1)d cannot be reduced.

Meanwhile, in this embodiment, since the relation of foregoing Formula (1) is realized, the value of n(R2-R1) will take on a negative value. Accordingly, it is possible to decrease the value of n(R2-R1) + (n-1)d, and the focal distance f of the fθ lens 28 can be increased in comparison to conventionally. The fact that the focal distance f can be set to be long means that the optical power of the fθ lens 28 can be reduced. Consequently, it will not be necessary to considerably change, in the main scanning direction, the thickness of the fθ lens 28 in the optical axis AX direction. In other words, the thickness of the fθ lens 28 can be made to be substantially uniform in the main scanning direction. Accordingly, it will be possible to stably mold the fθ lens 28 and reduce the deterioration in the optical performance between lots.

Upon arranging foregoing Formula (13), following Formula (14) can be obtained.

$$R1-R2>-(n-1)d/n...(14)$$

Thus, based on foregoing Formula (1) and Formula (14), it is possible to elicit following Formula (2).

$$0>R1-R2>-(n-1)d/n...(2)$$

Note that the refractive index n of the optical lens material is 2 at maximum, it is possible to elicit following Formula (21).

$$0>R1-R2>-d/2...(21)$$

In addition, since the refractive index n of the optical lens material is generally near 1.5, it is possible to elicit following Formula (22) approximately.

$$0>R1-R2>-d/2...(22)$$

Meanwhile, with the fθ lens 28 lens that satisfies foregoing Formula (1), the convergence of the light beam emitted from the exit face 282 becomes relatively weak. Thus, the collimator lens 23 desirably has optical power capable of converting the outgoing light from the collimator lens 23 into convergent light. As a result of the collimator lens 23 having optical power capable of generating convergent light, the light path length can be shortened.

<Example 1>

An example of the construction data of the imaging optical system which satisfies the requirements of the optical scanning device 104 according to the first embodiment is shown as Example 1. The imaging optical system of Example 1 is configured, as shown in Fig. 3, in order from the semiconductor laser 22 side, from one collimator lens 23, one cylindrical lens 24, and one fθ lens 28. Moreover, the optical performance of the respective lenses of Example 1 and the face shape of the fθ lens 28 are as per Table 1.

[Table 1]

| Collimator Lens | | Cylindrical Lens | |
|---|---|---|---|
| f | 18 | f | 50 |
| Fb | 330 | n | 1.48 |
| n | 1.51 | | |
| fθ Lens | | | |
| f | 373 | Polygon-fθ distance | 23 |
| n | 1.5 | fθ-field distance | 112 |
| d | 9 | | |
| R1 | | | |
| Main Scanning | | Sub Scanning | |
| Rm | 2.998E+01 | Rs0 | 1.002E+01 |
| Ky | -1.268E+01 | Kx | 0 |
| A3 | -4.218E-06 | B3 | -4.447E-05 |
| A4 | -5.398E-06 | B4 | 1.546E-04 |
| A5 | 4.288E-10 | B5 | -1.020E-07 |
| A6 | 5.760E-10 | B6 | -3.487E-07 |
| A7 | 2.349E-12 | B7 | -2.265E-10 |
| A8 | 2.079E-13 | B8 | 9.136E-10 |
| A9 | -7.852E-16 | B10 | -5.881E-13 |
| A10 | 1.579E-17 | | |
| R2 | | | |
| Main Scanning | | Sub Scanning | |
| Rm | 2.690E+01 | Rs0 | 7.581E+00 |
| Ky | -9.499E+00 | Kx | 3.100E-06 |
| A3 | -7.925E-06 | B3 | -4.606E-06 |
| A4 | -5.225E-06 | B4 | -2.075E-06 |
| A5 | 2.549E-09 | B5 | 4.167E-11 |
| A6 | 3.828E-10 | B6 | -9.724E-10 |
| A7 | -8.032E-13 | B7 | 7.896E-13 |
| A8 | -1.775E-13 | B8 | -5.106E-13 |
| A9 | 2.017E-16 | B10 | -4.400E-18 |
| A10 | -5.475E-18 | | |

In Table 1, Fb represents the back focus of the collimator lens 23. "Polygon-fθ distance" represents the distance between the entrance face 281 of the fθ lens 28 and the reflecting surface of the polygon mirror 26, and "fθ-field distance" represents the distance between the exit face 282 of the fθ lens 28 and the peripheral surface 103S of the photoreceptor drum 103, respectively. Note that the unit of f, Fb, d, "Polygon -fθ distance", and "fθ-field distance" in Table 1 is millimeters. Moreover, in Table 1, "R1" column represents the face shape of the entrance face 281 of the fθ lens 28, and "R2" column represents the face shape of the exit face 282 of the fθ lens 28, respectively. Note that Rm represents the main scanning curvature radius, Rs0 represents the sub scanning curvature radius, Ky represents the main scanning conic coefficient, Kx represents the sub scanning conic coefficient, and An and Bn (n is an integer) represent the high order coefficients of the face shape. By way of reference, in this Example, the main scanning curvature radius (R1) of the entrance face 281 of the fθ lens 28 = 29.98 mm, the main scanning curvature radius (R2) of the exit face 282 of the fθ lens 28 = 26.90 mm, lens thickness d = 9 mm, and refractive index n = 1.5, and satisfy foregoing Formula (1) and Formula (2).

The face shape of the entrance face 281 and the exit face 282 is defined based on the following formula showing the sag amount by using a local orthogonal coordinate system (x, y, z) with the face vertex as the origin and the direction of heading toward the peripheral surface 103S as the positive direction of the z axis. However, Zm (main scanning direction) and Zs (sub scanning direction) are the displacement (face vertex reference) in the z axis direction at the position of height Y, Cm = 1/Rm, and Cs = 1/Rs.

$$\text{Sag amount} \quad \text{Sag} = Zm + Zs$$

$$Zm = \frac{Cm \cdot y^2}{1 + \sqrt{(1 - (1 + Ky)Cm^2 \cdot y^2)}} + A3 \cdot y^3 + A4 \cdot y^4 + A5 \cdot y^5 + A6 \cdot y^6 + A8 \cdot y^8 + A10 \cdot y^{10}$$

$$Rs = Rs0 + B1 \cdot y + B2 \cdot y^2 + B3 \cdot y^3 + B4 \cdot y^4 + B5 \cdot y^5 + B6 \cdot y^6 + B8 \cdot y^8 + B10 \cdot y^{10}$$

$$Zs = \frac{Cs \cdot x^2}{1 - \sqrt{(1 - (1 + Kx)Cs^2 \cdot x^2)}}$$

Fig. 5 is a graph showing the optical property (field curvature) of the optical scanning device including the optical system of Example 1. As evident from Fig. 5, the field curvatures in both the main scanning direction and the sub scanning direction are within the range of 0.5 mm or less, and it was confirmed that there are no practical problems.

<Second embodiment of optical scanning device>

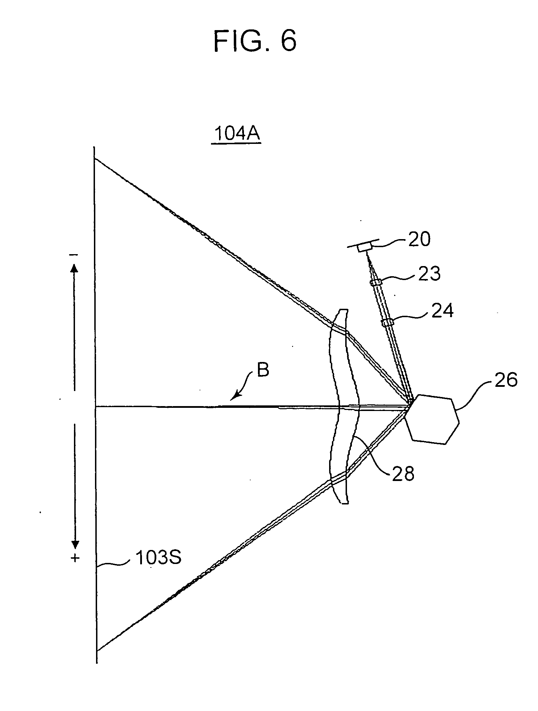

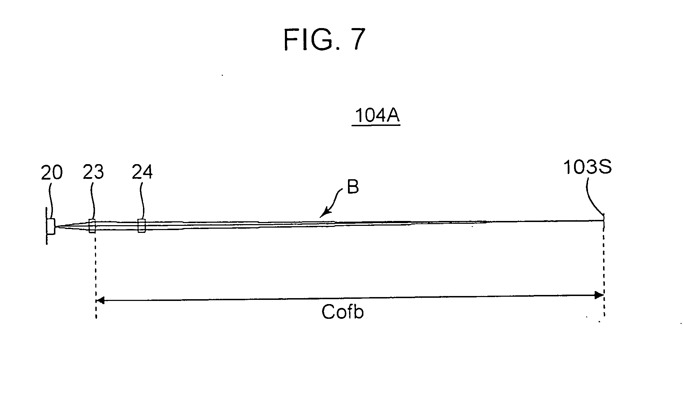

The optical scanning device 104A according to second embodiment is now explained. Fig. 6 is a light path diagram showing the configuration of the optical scanning device 104A according to the second embodiment in the main scanning cross section, and Fig. 7 is a light path diagram of the optical scanning device 104A in the sub scanning cross section. However, in Fig. 7, the polygon mirror 26 and the fθ lens 28 are excluded from the light path.

The optical scanning device 104A has the same arrangement of optical elements as the optical scanning device 104 of the first embodiment, and includes a laser unit 20 (light source), a collimator lens 23 (part of the incident optical system), a cylindrical lens 24 (part of the incident optical system), a polygon mirror 26 (deflector), and one fθ lens 28 (scanning lens). The fθ lens 28 is a lens that satisfies foregoing Formula (1) and Formula (2).

In the first embodiment, it was explained that the collimator lens 23 desirably includes the optical power capable of generating the convergent light. In the second embodiment, an optical scanning device 104A capable of exhibiting even more favorable optical property is explained as a result of the fθ lens 28 satisfying foregoing Formula (1) and Formula (2), the collimator lens 23 having optical power, and optimizing the relation of the back focus Cofb of the collimator lens 23 and the focal distance fm of the fθ lens 28 in the main scanning direction.

As shown in Fig. 7, the collimator lens 23 has optical power capable of converting the outgoing light (laser beam B) from the exit face of the collimator lens 23 into convergent light. The back focus Cofb of the collimator lens 23 is the distance from the exit face of the collimator lens 23 to the peripheral face 103S of the photoreceptor drum 103 as the imaging surface, and shows the level of convergence of the laser beam B that enters the fθ lens 28. In the second embodiment, the focal distance fm of the fθ lens 28 in the main scanning direction and the back focus Cofb satisfy following Formula (3).

$$1.0 < fm/Cofb < 3.2 \ldots (3)$$

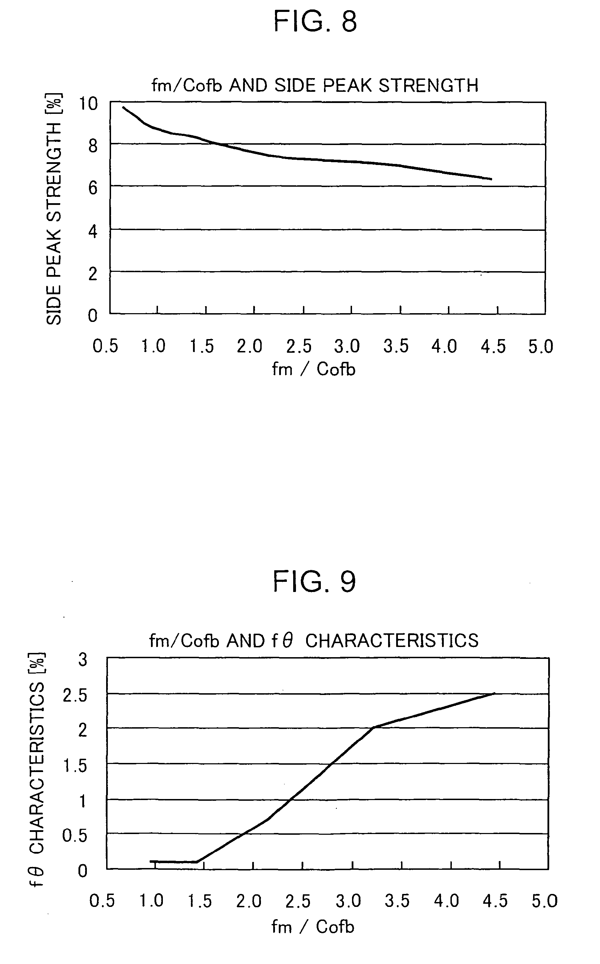

Fig. 8 is a graph in which the fm/Cofb of foregoing Formula (3) takes on a horizontal axis, and the side peak strength [%] takes on a vertical axis. The side peak strength is the optical intensity of the laser beam B in the peripheral region of a region referred to as the beam diameter. The beam diameter of the laser beam B is represented with the diameter of the region having a value of $1/e^2$ of the peak strength (13.5% of the peak strength) of the laser beam B. The side peak strength is the optical intensity of the peak light which exists in the peripheral region of the main region configuring the foregoing beam diameter. General speaking, when the side peak strength is large, the side lobe region formed around the main lobe having the peak strength of the laser beam B becomes large. This fact shows that the imaging performance of the laser beam B is inferior. In the image forming apparatus, in order to prevent the image from being affected, a side peak strength of approximately less than 9% is demanded.

Fig. 9 is a graph in which the fm/Cofb of foregoing Formula (3) takes on a horizontal axis, and the fθ characteristics [%] takes on a vertical axis. The fθ characteristics are an index showing the difference between the actual image height h and the ideal image height h0, and is represented by the following formula.

$$f\theta \text{ characteristics} = ((h-h0)/h0) \times 100 [\%]$$

Needless to say, fθ characteristics = 0[%] is ideal, and the greater the value, the greater the difference between the target position and the irradiation position of the laser beam B. In the image forming apparatus, in order to prevent the image from being affected, fθ characteristics of approximately less than 2% is demanded.

When the back focus Cofb of the collimator lens 23 is reduced (shortened), and the level of convergence of the laser beam B that enters the fθ lens 28 is increased, the focal distance fm of the fθ lens 28 in the main scanning direction can be increased (lengthened). In other words, the optical power of the fθ lens 28 can be reduced. Nevertheless, as evident from Fig. 9, when the value of fm/Cofb exceeds 3.2, the fθ characteristics will exceed 2%, and this is a level that will affect the image. As a result of reducing the value of fm/Cofb, the fθ characteristics can be improved. However, as evident from Fig. 8, when the value of fm/Cofb becomes less than 1.0, the side peak strength becomes a level that will affect the image.

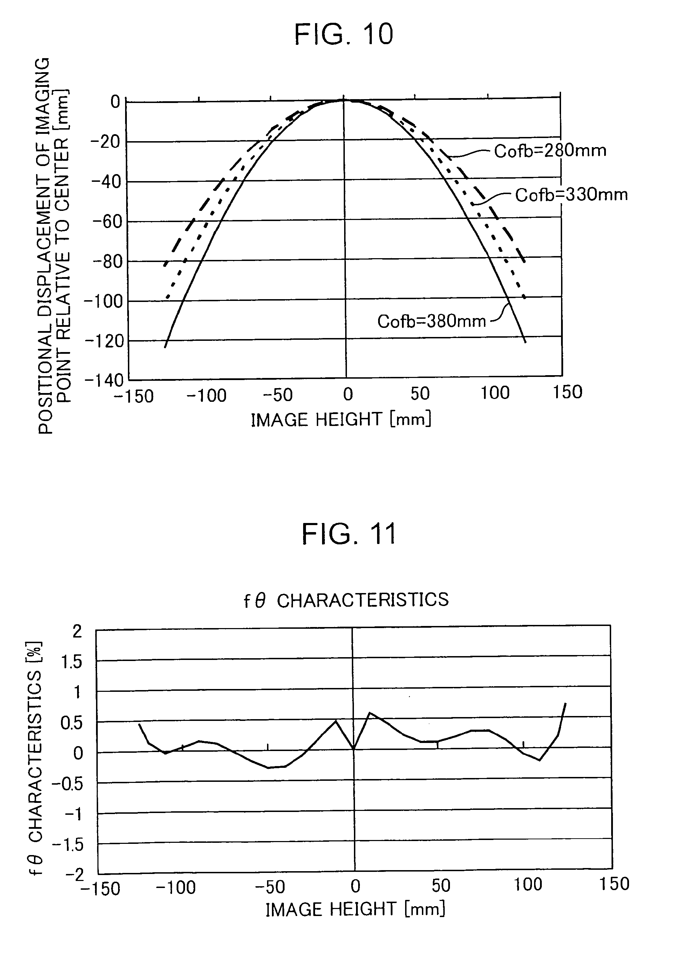

The foregoing point is now further explained with reference to Fig. 10. Fig. 10 is a graph showing the displacement of the imaging point position relative to the center (image height = 0 mm) when using, as the collimator lens 23, lenses having the three types of back focus Cofb of 380 mm, 330 mm and 280 mm. In Fig. 10, the negative region of the image height corresponds to the region of the arrow of "-" indicated near the peripheral surface 103S of Fig. 6, and the positive region of the image height corresponds to the region of the arrow of " +". Note that the characteristics of Fig. 10 were measured by excluding the fθ lens 28 from the optical system.

As evident from Fig. 10, as the back focus Cofb of the collimator lens 23 is reduced and the level of convergence of the laser beam B that enters the fθ lens 28 is increased, the positional displacement of the imaging point at the end part of the image height will decrease. Here, Cofb = 280 mm shows the smallest positional displacement of the imaging point. The fθ lens 28 assumes the role of correcting such positional displacement of the imaging point. Since the positional displacement of the imaging point at the end part of the image height will decrease as the back focus Cofb is smaller as described above, the difference in the optical power between the center part and end part of the fθ lens 28 in the main scanning direction can be reduced. In other words, the difference in the uneven thickness of the fθ lens 28 can be reduced in the main scanning direction. However, for the amount that the optical power of the collimator lens 23 is large, the optical power of the fθ lens 28 will decrease. Consequently, the imaging performance of the fθ lens 28 will deteriorate. Accordingly, the correction of aberration by the fθ lens 28 will become insufficient, the side peak strength will increase, and the area of the side lobe tends to increase.

Meanwhile, as the back focus Cofb of the collimator lens 23 is increased and the level of convergence of the laser beam B that enters the fθ lens 28 is reduced, the positional displacement of the imaging point at the end part of the image height is increased. In the foregoing case, when the difference in the optical power between the center part and the end part of the fθ lens 28 in the main scanning direction is increased, the optical power of the fθ lens 28 itself also needs to be increased. Consequently, the correction of aberration by the fθ lens 28 becomes favorable and the side lobe can be reduced, but the fθ characteristics tend to deteriorate.

As described above, the back focus Cofb of the collimator lens 23 and the focal distance fm of the fθ lens 28 in the main scanning direction are of a relation where adverse effect is inflicted on the optical property when one is decreased (increased) relative to the other. Accordingly, in the optical design, as a result of setting the back focus Cofb and the focal distance fm so as to satisfy the relation of foregoing Formula (3), it is possible to provide an optical scanning device 104A having a favorable imaging performance and capable of inhibiting the positional displacement of the imaging point in the main scanning direction.

<Example 2>

Next, an example of the construction data of the imaging optical system which satisfies the requirements of the optical scanning device 104A according to the second embodiment is shown as Example 2. The imaging optical system of Example 2 is configured, as shown in Fig. 6, in order from the laser unit 20 side, from one collimator lens 23, one cylindrical lens 24, and one fθ lens 28. Moreover, the optical performance of the respective lenses of Example 2 and the face shape of the fθ lens 28 are as per Table 2. Note that, in Example 2, the back focus Cofb of the collimator lens 23 = 330 mm, the focal distance fm of the fθ lens 28 in the main scanning direction = 706 mm, and fm/Cofb = 2.1.

[Table 2]

| Collimator Lens | | Cylindrical Lens | |
|---|---|---|---|
| f | 18 | f | 50 |
| Fb | 330 | n | 1.48 |
| n | 1.51 | | |
| fθ Lens | | | |
| f | 706 | Polygon-fθ distance | 24.5 |
| n | 1.5 | fθ-field distance | 117.51 |
| d | 9 | | |
| R1 | | | |
| Main Scanning | | Sub Scanning | |
| Rm | 24.2946 | Rs0 | -9.079E+00 |
| Ky | -8.814E+00 | Kx | 0 |
| A3 | -1.756E-06 | B1 | 1.764E-02 |
| A4 | -3.986E-06 | B2 | -2.300E-02 |
| A5 | 9.606E-10 | B3 | -5.379E-05 |
| A6 | 6.818E-10 | B4 | -1.740E-04 |
| A7 | 0.000E+00 | B5 | 5.086E-08 |
| A8 | 8.998E-15 | B6 | 4.597E-07 |
| A9 | 0.000E+00 | B7 | -1.721E-10 |
| A10 | -1.144E-17 | B8 | -1.135E-09 |
| | | B10 | 8.189E-13 |
| | | | |
| R2 | | | |
| Main Scanning | | Sub Scanning | |
| Rm | 22.8421 | Rs0 | -7.245E+00 |
| Ky | -7.862E+00 | Kx | -6.966E-01 |
| A3 | 1.065E-06 | B1 | 3.802E-03 |

(continued)

| R2 | | | |
|---|---|---|---|
| Main Scanning | | Sub Scanning | |
| A4 | -3.173E-06 | B2 | -1.382E-02 |
| A5 | -1.308E-11 | B3 | -2.487E-05 |
| A6 | 3.685E-10 | B4 | 2.453E-06 |
| A7 | 0.000E+00 | B5 | 1.278E-08 |
| A8 | -8.602E-14 | B6 | 8.940E-10 |
| A9 | 0000E+00 | B7 | -1.616E-12 |
| A10 | -1.224E-17 | B8 | 7.403E-13 |
| | | B10 | -1.853E-16 |

The symbols used in Table 2 are the same as those used in foregoing Table 1. By way of reference, in this Example, the main scanning curvature radius (R1) of the entrance face 281 of the fθ lens 28 = 24.29 mm, the main scanning curvature radius (R2) of the exit face 282 of the fθ lens 28 = 22.84 mm, lens thickness d = 9 mm, and refractive index n = 1.5, and satisfy foregoing Formula (1) and Formula (2).

The face shape of the entrance face 281 and the exit face 282 is defined based on the following formula showing the sag amount by using a local orthogonal coordinate system (x, y, z) with the face vertex as the origin and the direction of heading toward the peripheral surface 103S as the positive direction of the z axis. However, Zm (main scanning direction) and Zs (sub scanning direction) are the displacement (face vertex reference) in the z axis direction at the position of height Y, Cm = 1/Rm, and Cs = 1/Rs.

$$\text{Sag amount} \quad Sag = Zm + Zs$$

$$Zm = \frac{Cm \cdot y^2}{1 + \sqrt{(1 - (1 + Ky)Cm^2 \cdot y^2)}} + A3 \cdot y^3 + A4 \cdot y^4 + A5 \cdot y^5 + A6 \cdot y^6 + A8 \cdot y^8 + A10 \cdot y^{10}$$

$$Rs = Rs0 + B1 \cdot y + B2 \cdot y^2 + B3 \cdot y^3 + B4 \cdot y^4 + B5 \cdot y^5 + B6 \cdot y^6 + B8 \cdot y^8 + B10 \cdot y^{10}$$

$$Zs = \frac{Cs \cdot x^2}{1 - \sqrt{(1 - (1 + Kx)Cs^2 \cdot x^2)}}$$

Fig. 11 is a graph showing the fθ characteristics of the optical scanning device having the optical system of Example 2. As evident from Fig. 11, the fθ characteristics of this optical system are of a low value across the entire image height, and it was confirmed that the value of the fθ characteristics are considerably lower than the value of fθ characteristics = 2% which affects the image.

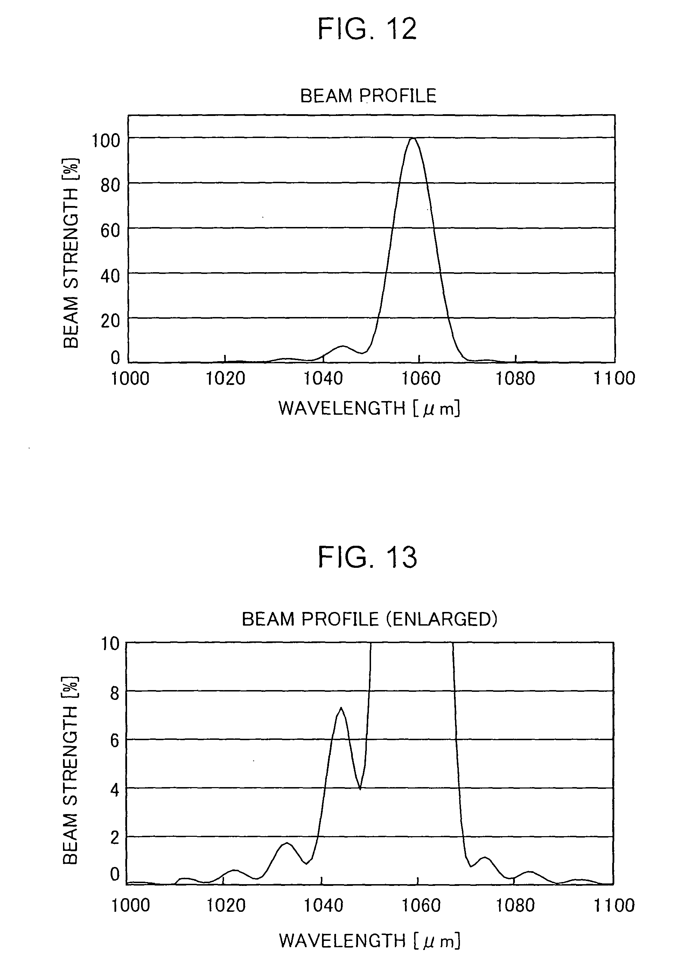

Moreover, Fig. 12 is a graph showing the beam profile of the spot of the laser beam B to be created on the imaging surface by the optical system of Example 2. Fig. 13 is a graph showing an enlarged version of the relevant part of the beam profile of Fig. 12. As evident from Fig. 12 and Fig. 13, the side lobe of the optical system in a beam profile merely includes side peak of approximately 7% relative to the peak strength. In other words, it was confirmed that the side peak light has been inhibited to a value that is considerably lower than the 9% level which affects the image.

According to the optical scanning device 104 of this embodiment explained above, as a result of satisfying foregoing Formula (1) and Formula (2), the thickness of the fθ lens 28 in the optical axis direction does not have to be considerably changed in the main scanning direction, and the fθ lens 28 can be stably molded. In other words, it is possible to prevent the thickness of the scanning lens in the optical axis direction from becoming thinner from the center part toward the end part in the main scanning direction. Accordingly, it is possible to improve the productivity of the fθ lens 28, as well as stabilize the optical performance of the fθ lens 28. Moreover, as a result of satisfying foregoing Formula (3) in addition foregoing Formula (1) and Formula (2), it is possible to provide an optical scanning device 104A even more superior in the fθ characteristics and imaging performance.

As described above, according to the present disclosure, the productivity of the scanning lens is favorable, and the optical performance of the scanning lens can also be stabilized.

Although the present disclosure has been fully described by way of example with reference to the accompanying drawings, it is to be understood that various changes and modifications will be apparent to those skilled in the art. Therefore, unless otherwise such changes and modifications depart from the scope of the present disclosure hereinafter defined, they should be construed as being included therein.

**Claims**

1. An optical scanning device (104), comprising:

    a light source (20) which emits a light beam;
    a deflector (26) which reflects and then deflects/scans the light beam emitted from the light source;
    an incident optical system (23,24) which causes the light beam emitted from the light source to enter the deflector; and
    one scanning lens (28) which includes a first face (281) facing the deflector and a second face (282) on an opposite side to the first face, and performs imaging of the deflected/scanned light beam on a surface (103S) to be scanned; wherein
    when a curvature radius of the first face (281) in a main scanning direction cross section is R1, a curvature radius of the second face (282) in a main scanning direction cross section is R2, a lens thickness in an optical axis direction at a center of the scanning lens (28) in the main scanning direction is d, and a refractive index of the scanning lens (28) is n, following Formula (1) and Formula (2) are satisfied:

$$0 < R2 < R1 \dots (1)$$

$$0 > R2 - R1 > -(n-1)d/n \dots (2).$$

2. The optical scanning device according to claim 1, wherein
    the incident optical system includes a collimator lens (23), and
    the collimator lens has optical power of converting outgoing light from the collimator lens into convergent light.

3. The optical scanning device according to claim 2, wherein
    when a back focus of the collimator lens (23) is Cofb, and a focal distance of the scanning lens (28) in a main scanning direction is fm, following Formula (3) is satisfied:

$$1.0 < fm/Cofb < 3.2 \dots (3).$$

4. An image forming apparatus (1), comprising:

    an image carrier (103) which carries an electrostatic latent image; and
    an optical scanning device which irradiates a light beam with a peripheral surface (103S) of the image carrier as a surface to be scanned, the optical scanning device being any one of claims 1 to 3.

FIG. 1

EP 2 631 694 A1

# FIG. 2

EP 2 631 694 A1

# FIG. 3

# FIG. 4

# FIG. 5

## FIELD CURVATURE

# FIG. 6

# FIG. 7

<u>104A</u>

# FIG. 8

**fm/Cofb AND SIDE PEAK STRENGTH**

# FIG. 9

**fm/Cofb AND f θ CHARACTERISTICS**

## FIG. 10

## FIG. 11

### f θ CHARACTERISTICS

# FIG. 12

## BEAM PROFILE

# FIG. 13

## BEAM PROFILE (ENLARGED)

**EUROPEAN SEARCH REPORT**

Application Number

EP 13 00 0948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 883 732 A (TAKADA KYU [JP] ET AL) 16 March 1999 (1999-03-16) * column 4, lines 28-47; figure 1 * * column 6, lines 38-52 * * column 8, lines 35-last; figure 6; table 1 * * column 10, lines 15-17 * ----- | 1-4 | INV. G02B13/00 |

TECHNICAL FIELDS
SEARCHED        (IPC)

G02B

The present search report has been drawn up for all claims

| Place of search | Date of completion of the search | Examiner |
|---|---|---|
| Berlin | 4 June 2013 | Ciarrocca, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 00 0948

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2013

| Patent document cited in search report | | Publication date | Patent family member(s) | | Publication date |
|---|---|---|---|---|---|
| US 5883732 | A | 16-03-1999 | DE | 19619273 A1 | 14-11-1996 |
| | | | FR | 2734066 A1 | 15-11-1996 |
| | | | GB | 2300727 A | 13-11-1996 |
| | | | IT | TO960392 A1 | 13-11-1997 |
| | | | JP | 3712017 B2 | 02-11-2005 |
| | | | JP | H0933850 A | 07-02-1997 |
| | | | US | 5883732 A | 16-03-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012040222 A